# EUROPEAN PATENT SPECIFICATION

(11) **EP 0 561 342 B1**
(45) Date of publication and mention of the grant of the patent: **19.07.1995**
(21) Application number: 93104250.1
(22) Date of filing: 16.03.1993
(51) Int. Cl.: C09D 5/14

(54) **Anti-fouling coating composition**
Bewuchshemmender Unterwasseranstrich
Composition de revêtement anti-salissure

(30) Priority: 17.03.1992 JP 92177/92
(43) Date of publication of application: 22.09.1993
(73) Proprietor: KANSAI PAINT CO. LTD., Amagasaki-shi Hyogo-ken (JP)
(72) Inventor: Kawashima, Takashi, Hiratsuka-shi, Kanagawa-ken (JP); Nakai, Noboru, Hiratsuka-shi, Kanagawa-ken (JP); Terashima, Hirokazu, Odawara-shi, Kanagawa-ken (JP); Nomura, Mineyuki, Yokohama-shi, Kanagawa-ken (JP)
(74) Representative: Weinhold, Peter, Dr.

(56) References cited:
- EP-A- 0 289 481
- EP-A- 0 364 271
- DE-A- 4 131 089
- DATABASE WPIL, Week 8926, Derwent Publications Ltd., London, GB; AN 89-189551; & JP-A-11 29 077
- DATABASE WPIL, Week 9021, Derwent Publications Ltd., London, GB; AN 90-159129; & JP-A-20 99 567

## Description

The present invention relates to anti-fouling coating compositions.

The submerged portions of ships and marine structures are usually coated with anti-fouling coating compositions so as to prevent corrosion or decreases in the speed of navigation of ships due to the deposition of marine organisms such as barnacles, polyzoa, ascidians and seaweed. Such anti-fouling coating compositions are applied also to culture nets to preclude lethal damage to fishes and shellfishes due to the deposition of marine organisms. These compositions include those comprising a polymer, rosin, plasticizer and like vehicle components and an anti-fouling agent, and those comprising a polymer of organotin-containing unsaturated monomer or a copolymer of such monomers as disclosed, for example, in Examined Japanese Patent Publications 21426/1965, 9579/1969 and 12049/1976.

The former compositions exhibit a anti-fouling effect owing to dissolving out of the rosin and the anti-fouling agent contained in the coating formed by the composition, whereas when the amount of insolubles of the coating increases during a prolonged period of submersion, the coating becomes rough-surfaced and less effective for preventing deposition of marine organisms. The latter compositions form a coating containing an organotin compound which is introduced into the polymer through an ester bond. When the coating is corroded with seawater, the ester bond undergoes hydrolysis, releasing the organotin compound and producing a carboxyl-containing polymer. This polymer dissolves in seawater, incessantly refreshing the coating surface as exposed to the water to maintain an anti-fouling effect. However, the coating contains the organotin compound generally in a large amount so as to effectively exhibit the anti-fouling effect, hence the drawback of exerting an adverse influence on fishes and shellfishes.

An object of the present invention is to provide a novel composition capable of forming an anti-fouling coating and free of the foregoing drawbacks of the prior-art coating compositions.

Another object of the present invention is to provide a novel composition free of an organotin compound and capable of forming an anti-fouling coating which exhibits an excellent anti-fouling effect over a prolonged period of time and yet produces no environmental hygienic problems.

These and other objects of the present invention will become apparent from the following description.

The present invention provides an anti-fouling coating composition which comprises (A) a resin, 3000-200,000 in number average molecular weight, having at least four acid anhydride groups in the molecule on the average, the acid anhydride groups being represented by the formula 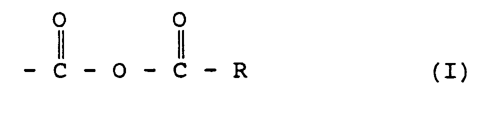
wherein R is a C₁₋₄₀ monovalent hydrocarbon group and (B) a rosin.

The present inventor has conducted intensive research to overcome the drawbacks of the prior art and consequently found that the coating composition containing the resin having noncyclic acid anhydride groups of the above-specified structure and the rosin as a resinous component exhibits an excellent anti-fouling effect over a prolonged period of time and yet produces no environmental hygienic problems.

The present invention has been accomplished based on this novel finding.

The C₁₋₄₀ monovalent hydrocarbon groups as mentioned herein include alkyl groups, cycloalkyl groups, aryl groups, aralkyl groups, polycyclic terpene groups, etc.

The alkyl groups as mentioned herein may be of the straight-chain or branched-chain type, and include, for example, methyl, ethyl, n-propyl, isopropyl, n-butyl, isobutyl, sec-butyl, tert-butyl, n-pentyl, isopentyl, tert-pentyl, neopentyl, n-hexyl, isohexyl, 1-methylpentyl, 2-methylpentyl, n-heptyl, 5-methylhexyl, n-octyl, 2-ethylhexyl, n-nonyl, n-decyl, n-dodecyl, n-tetradecyl, n-hexadecyl, n-octadecyl, n-eicosyl, n-hexacosyl and like groups. Suitable among these groups are those having 1 to 18 carbon atoms, especially those having tertiary carbon atoms. Useful cycloalkyl groups can generally be those having 3 to 7 carbon atoms, such as cyclopropyl, cyclobutyl, cyclopentyl, cyclopentylmethyl, cyclopentylethyl, cyclohexyl, cyclohexylmethyl, cyclohexylethyl, cycloheptyl and like groups, among which cyclopentyl and cyclohexyl are preferable.

On the other hand, useful aryl groups can be of the monocyclic or polycyclic type. Examples of monocyclic aryl groups are phenyl, toluyl, xylyl and like groups. Examples of polycyclic aryl groups are naphthyl and like groups. The aralkyl group is an alkyl group substituted with such an aryl group. Examples of aralkyl groups are benzyl, phenethyl and the like. Examples of useful polycyclic terpene groups are Pinanyl, Pinanylene, Thujenyl, Norbornyl, Abietynyl 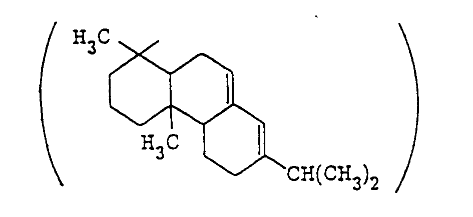
and the like.

The resins (A) useful as the essential component of the present composition and containing noncyclic acid anhydride groups include those having acid anhydride groups of the formula (I) wherein R is a C₁₋₄₀ monovalent hydrocarbon group. Usable as such resins are, for example, resins prepared by the following processes.
(1) Resins obtained by reacting a resin containing a carboxylic acid salt with a compound having a COCℓ group.
(2) Resins obtained by reacting a resin having a COCℓ group with a compound containing a carboxylic acid salt.
(3) Resins obtained by reacting a radical-polymerizable unsaturated monomer containing a carboxylic acid salt (hereinafter referred to as the "monomer (a)") with the compound having a COCℓ group to prepare a radical-polymerizable unsaturated monomer containing an acid anhydride group, and thereafter subjecting the monomer singly to a radical polymerization reaction or, when required, reacting the monomer with other radical-polymerizable unsaturated monomer (hereinafter referred to as the "monomer (b)") for radical copolymerization.
(4) Resins obtained by reacting a radical-polymerizable unsaturated monomer having a COCℓ group (hereinafter referred to as the "monomer (c)) with the compound containing a carboxylic acid salt to prepare a radical-polymerizable unsaturated monomer containing an acid anhydride group, and thereafter subjecting the monomer singly to a radical polymerization reaction or reacting the monomer with the monomer (b) for radical copolymerization.
(5) Resins obtained by subjecting a carboxylic acid resin and a carboxyl-containing compound to a dehydration reaction.

While vinyl, polyester, alkyd and like resins are usable as carboxylic acid salt-containing resins,
it is desirable to use salts of vinyl resins. More specifically stated, preferable to use are resins prepared by reacting a carboxyl-containing radical-polymerizable unsaturated monomer, such as (meth)acrylic acid, crotonic acid, itaconic acid, maleic acid, fumaric acid, carboxyethyl (meth)acrylate or 2-carboxypropyl (meth)acrylate, with the desired monomer (b) for radical polymerization to obtain a resin, and neutralizing the resin with a basic compound (such as sodium hydroxide, potassium hydroxide or like inorganic basic compound, or a tertiary amine or like organic basic compound); and resins prepared by reacting a carboxylic acid salt containing radical-polymerizable unsaturated monomer (such as the salt of (meth)acrylic acid with an alkali metal (e.g., sodium or potassium) or with an organic amine (e.g., tertiary amine)) with the desired monomer (b) for radical polymerization.

The compound having a COCℓ group is the chloride of a monocarboxylic acid compound. Examples of suitable monocarboxylic acids are acetic acid, propionic acid, butyric acid, caproic acid, caprylic acid, capric acid, lauric acid, myristic acid, palmitic acid, VERSATIC acid (Shell Chemical Company, trademark, Synthetic Saturated acid), stearic acid, oleic acid, coconut oil fatty acid, olive oil fatty acid, palm oil fatty acid and like aliphatic acids, naphthenic acid and like alicyclic acids, benzoic acid, p-tert-benzoic acid, methylbenzoic acid and like aromatic acids, rosin and like polycyclic terpene hydrocarbon acids, etc.

The resin having a COCℓ group is, for example, a homopolymer of CH₂=CHCOCℓ or copolymer thereof with a monomer (b).

Examples of suitable compounds containing a carboxylic acid salt are salts (e.g., alkali metal salts and organic salts already mentioned) of aforementioned monocarboxylic acid compounds.

Usable as monomers (a) are, for example, the above-mentioned carboxyl-containing radical-polymerizable unsaturated monomers.

Examples of useful monomers (b) are C₁₋₁₈ alkyl esters of acrylic acid or methacrylic acid, such as methyl acrylate, ethyl acrylate, propyl acrylate, isopropyl acrylate, butyl acrylate, hexyl acrylate, octyl acrylate, lauryl acrylate, methyl methacrylate, ethyl methacrylate, propyl methacrylate, isopropyl methacrylate, butyl methacrylate, hexyl methacrylate, octyl methacrylate and lauryl methacrylate; C₂₋₈ alkenyl esters of acrylic acid or methacrylic acid, such as allyl acrylate and allyl methacrylate; C₃₋₁₈ alkenyloxyalkyl esters of acrylic acid or methacrylic acid, such as allyloxyethyl acrylate and allyloxyethyl methacrylate; vinyl aromatic compounds such as styrene, alpha-methylstyrene, vinyltoluene and p-chlorostyrene; polyolefin compounds such as butadiene, isoprene and chloroprene; acrylonitrile, methacrylonitrile, methyl isopropenyl ketone, vinyl acetate, VEOVA MONOMER (product of Shell Chemical Company, trademark), vinyl propionate, vinyl pivalate, acrolein, methacrolein; etc.

These monomers (b) can be used singly, or at least two of them are usable in combination.

It is desirable to chiefly use C₁₋₁₈ alkyl esters of acrylic acid or methacrylic acid and styrene as the monomer (b) since these monomers are readily amenable to radical polymerization and provide coatings which are excellent in strength and resistance to salt water.

Examples of useful monomers (c) are CH₂=CHCOCℓ, etc.

When the compound containing a COCℓ group and the compound containing a carboxylic acid salt comprise a substituted or unsubstituted benzoic acid as the monocarboxylic acid compound component thereof, the acid assures the advantage that the coating obtained has moldproofing and bactericidal properties imparted thereto.

The radical polymerization reaction and the reaction for forming an acid anhydride group (reaction between COCℓ group and carboxylic acid salt) can be carried out by known methods. For example, the radical polymerization reaction can be carried out in an inert organic solvent in the presence of a polymerization catalyst (e.g., azo compound, peroxide compound or diazo compound) usually with heating at 60 to 200°C. Examples of useful inert organic solvents are ethylene glycol dimethyl ether and like ethers; toluene, xylene and like aromatic hydrocarbons; ethyl acetate and butyl acetate and like esters; cyclohexanone, methyl isobutyl ketone and like ketones; etc. The acid anhydride group forming reaction can be effected in such an inert organic solvent at room temperature or with heating.

The resin (A) for use in the composition of the present invention has at least four, preferably at least ten, acid anhydride groups of the formula (I) per molecule on the average. If the number of acid anhydride groups is less than four on the average, the resin will have the drawback of failing to dissolve in water even when hydrolyzed, to permit the coating to be refreshed by abrasion and to retain satisfactory anti-fouling properties over a prolonged period of time. Although the upper limit of the number of acid anhydride groups is not determined specifically, it is usually 150 per molecule on the average.

The resin (A) is 3,000 to 200,000, preferably 5,000 to 80,000, in number-average molecular weight. When less than 3,000 in number-average molecular weight, the resin is inferior in long-term anti-fouling effect, whereas if greater than 200,000, the resin is not amenable to hydrolysis, will not permit the coating to dissolve out smoothly and to exhibit a sufficient anti-fouling effect, and is therefore undesirable.

The resin (A) constituting the coating composition of the present invention has acid anhydride groups represented by the foregoing formula in the molecule. The acid anhydride groups in the composition partly hydrolyze due to the moisture in the air or the like during the production of the resin (A) or the coating composition to give acid groups. The resin (A) for use herein includes resins which have acid groups produced by such hydrolysis.

Examples of the rosin (B) for use in the anti-fouling coating composition include a gum rosin, wood rosin and these rosins as modified. Among them, a gum rosin containing a large proportion of abietic acid is preferred. Modified rosins include maleinized rosins and phthalated rosins.

The resin (A) and the rosin (B) are used in amounts of 5 to 99% by weight of the former and 95 to 1% by weight of the latter, preferably 10 to 75% by weight of the former and 90 to 25% by weight of the latter, based on the total amount of the resin and rosin. When the amount of the resin (A) exceeds 99% by weight and the amount of the rosin (B) is below 1% by weight, reduced coating strength results and the coating is rendered insufficiently soluble in water, thereby lower in the ability to sustain the anti-fouling property for a long term. When the amount of the resin (A) is below 5% by weight and the amount of the rosin (B) exceeds 95% by weight, the coating is rendered so rigid and brittle that a thick coating may cause cracking.

The anti-fouling coating composition of the present invention contains a mixture of the resin (A) and the rosin (B) as the resin component and optionally may contain an organic solvent, extender pigment, coloring pigment, plasticizer, additives conventionally used for coating compositions and so on.

The organic solvent for use herein is used to adjust the viscosity of the composition and to improve the coating amenability thereof and can be any of organic solvents which can dissolve said resin component. Examples of useful organic solvents are ethylene glycol dimethyl ether and like ether solvents; toluene, xylene and like aromatic hydrocarbon solvents; ethyl acetate, butyl acetate and like ester solvents; cyclohexanone, methyl ethyl ketone and like ketone solvents; and ethanol, propyl alcohol, butanol and like alcohol solvents.

Examples of useful extender pigments are calcium carbonate, barium sulfate, talc, clay, silica and gypsum. Examples of useful coloring pigments are titanium oxide, zinc oxide, basic lead carbonate, carbon black, graphite, yellow lead, red iron oxide, red lead oxide, chromium oxide and cobalt blue. Useful plasticizers include, for example, tricresyl phosphate and chlorinated paraffin.

Useful additives for coating compositions are surface modifiers (such as polyether-modified silicone, silicone oil, liquid paraffin, solid paraffin, microcrystal wax, petrolatum and polyethylene wax), anti-sagging agents, anti-foaming agents, and anti-settling agents.

The anti-fouling coating composition of the present invention, even if free of an anti-fouling agent, can exhibit an anti-fouling property due to the hydrolysis of the resin component in water (sea water), followed by dissolving out in sea water in a proper degree while releasing a dicarboxylic acid compound or a water-soluble compound. The coating composition of the invention may contain a conventional anti-fouling agent to attain the required level of anti-fouling property. Examples of conventional anti-fouling agents which can be used in the invention are cuprous oxide, copper thiocyanate, copper powder and like copper-based anti-fouling agents; triphenyltin fluoride, triphenyltin chloride, tributyltin oxide and like organotin anti-fouling agents; zinc ethylenebis (dithiocarbamate), tetramethylthiuram disulfide and like nitrogen- and sulfur-containing anti-fouling agents; bactericides such as nitrile compounds, benzothiazole compounds, triazine compounds, urea compounds, isothiazoron compound, maleimide compounds, N-haloalkylthio compounds, tetracycline compounds and zinc pyrithione and like pyridine compounds; and zinc oxide.

The coating composition of the invention exhibits an excellent anti-fouling effect when applied to the base materials of buildings and underwater structures which need to be prevented from fouling. The composition is applied, for example, to the interior of housing facilities, and buildings which need to provide a biologically clean environment, such as hospitals, breweries, food factories (e.g., bakeries), pharmaceutical production factories, electronic apparatus production factories, whereby the environment can be effectively prevented from biological contamination. The composition is applicable also to underwater structures (e.g., ships, harbor facilities, buoys, pipelines, bridges, submarine facilities, culture nets and fish trapping nets) for preventing deposition and growth of underwater organisms. When applied to underwater structures, the composition provides a coating which retains an excellent anti-fouling effect over a prolonged period of time and which is nevertheless very safe to the human body. When the composition is to be applied to underwater structures, it is generally desirable to apply a zinc-epoxy shop primer or epoxy-rubber chloride corrosion inhibiting base coat composition to the substrate first and subsequently apply the composition to the coating.

The composition can be applied to the surface of substrate, for example, by brush coating, spray coating, roller coating or dipping. Although not limited specifically, the amount of application is generally in the range of 5 to 400 g/m². Although the coating can be dried at room temperature, the coating may be heated at a temperature of up to 200°C for drying when required.

The composition of the invention exhibits a higher long-term anti-fouling effect than the conventional composition wherein a resin having a cyclic acid anhydride group is used as a vehicle component, presumably for the following reason.

When the coating containing the resin having noncyclic acid anhydride groups of the formula (I) is immersed in water, the acid anhydride groups hydrolyze to release a monocarboxylic acid compound and form a carboxyl-containing resin. The release of the monocarboxylic acid compound prevents deposition of underwater organisms on the coating, and the carboxyl-containing resin refreshes the coating, causing the coating to produce an anti-fouling effect.

Furthermore, the monovalent hydrocarbon group R of the formula (I), when given an increased number of carbon atoms, imparts increased hydrophobicity to the coating to lower the rate of dissolving out of the monocarboxylic acid, whereas a decrease in the number of carbon atoms of the group gives enhanced hydrophilicity to the coating to cause the coating to dissolve out at a higher rate. Thus, the rate of dissolving out of the coating is adjustable as desired.

The rosin component gives the resin component an ability to strengthen a coating and renders the resin component soluble in water to a suitable extent, thereby enabling the coating to sustain an excellent anti-fouling property for a long term without the resin component remaining undissolved in the coating surface.

Furthermore, even if the anti-fouling coating composition of the invention contains an anti-fouling agent (e.g. cuprous oxide), no thickening occurs and a high storage stability is attained.

The present invention will be described in greater detail with reference to the following examples.

### Monomer Preparation Example

A 86-g quantity of methacrylic acid and 50 g of deionized water were placed into a four-necked flask equipped with a stirrer, thermometer and reflux tube. An aqueous solution of 40 g of sodium hydroxide in 50 g of deionized water was further placed dropwise into the flask. When the mixture ceased evolving heat, 400 g of toluene was added to the mixture, the mixture was heated, and water was removed therefrom under reflux by a water separator. The mixture was thereafter cooled to room temperature, 78.5 g of acetyl chloride was added dropwise thereto, and the mixture was reacted for 1 hour and then filtered to obtain a colorless transparent monomer solution.

### Vinyl Polymer Preparation Example 1

A 90-g quantity of xylene was placed into the same device as used in the above example. A mixture of 100 g of the monomer solution as concentrated to 50 wt. %, 50 g of methyl methacrylate and 3 g of azobisisobutyronitrile was added dropwise to the xylene over a period of 2 hours, followed by reaction at 100°C with stirring for 1 hour. Thereafter 1 g of azobisisobutyronitrile and 10 g of xylene were added to the mixture over a period of 1 hour for a further reaction to obtain a light yellow viscous liquid containing 50 wt.% of solids. The polymer thus prepared was 18,000 in number-average molecular weight and had about 70 acid anhydride groups per molecule.

### Vinyl Polymer Preparation Example 2

A 100-g quantity of toluene and 107.6 g of butyl acetate were placed into the same device as used above, and a mixture of 7.2 g of acrylic acid, 52.8 g of n-butyl methacrylate, 40 g of ethyl acrylate and 2 g of benzoyl peroxide was added dropwise to the mixture over a period of 2 hours, followed by reaction at 100°C with stirring for 1 hour. Thereafter 1 g of benzoyl peroxide and 50 g of toluene were added to the mixture over a period of 1.5 hours for a further reaction. The reaction mixture was cooled to 80°C, 11.2 g of 50 wt.% aqueous solution of potassium hydroxide was then added thereto, the mixture was heated, and water was separated off under reflux by a water separator. The reaction mixture was thereafter cooled to 50°C, stirred for 3 hours with addition of 14.1 g of benzoyl chloride and subsequently decanted to obtain a light yellow viscous liquid containing 30 wt.% of solids. The polymer thus prepared was 9,000 in number-average molecular weight and had about 9 acid anhydride groups per molecule.

### Vinyl Polymer Preparation Example 3

A mixture was prepared from 25 g of maleic anhydride, 25 g of styrene, 30 g of methyl methacrylate, 20 g of ethyl acrylate, 43 g of xylene, and 2.0 g of benzoyl peroxide and reacted at 90 to 100°C with stirring for 3 hours. With addition of 1.0 g of benzoyl peroxide and 107 g of xylene, the mixture was further reacted at 90 to 100°C with stirring for 2 hours to obtain a light yellow viscous liquid containing 40 wt.% of solids. The polymer thus prepared was 30,000 in number-average molecular weight and had about 75 acid anhydride groups per molecule.

### Example 1

A 10.0-g quantity of the copolymer solution (solids content 50 wt.%) of Vinyl Polymer Preparation Example 1, 15.0 g of gum rosin, 30.0 g of copper suboxide, 2.0 g of red iron oxide, 0.5 g of Aerosil #200 (trademark for silica powder manufactured by Degussa AG., Germany, same as hereinafter) and 11.0 g of xylene were mixed together in a paint conditioner for dispersion to obtain an anti-fouling coating composition.

The thus obtained coating composition had a viscosity of about 80 KU (as determined using a Stomer viscometer at 25°C according to JIS K-5400). The composition was tested for storage stability by 3-month standing at 40°C and was not thickened at all and was excellent in storage stability.

### Example 2

A 33.3-g quantity of the copolymer solution (solids content 30 wt.%) of Vinyl Polymer Preparation Example 2, 10 g of gum rosin, 25.0 g of cuprous copper, 5 g of zinc pyrithione, 3.0 g of calcium carbonate, 0.5 g of Aerosil #200 and 2.5 g of xylene were made into an anti-fouling coating composition in the same manner as in Example 1. The obtained coating composition was not thickened at all and was excellent in storage stability.

### Comparative Example 1

A 66.6-g quantity of the copolymer solution (solids content 30 wt.%) of Vinyl Polymer Preparation Example 2, 25.0 g of cuprous copper, 5 g of zinc pyrithione, 3.0 g of calcium carbonate, 0.5 g of Aerosil #200 and 2.5 g of xylene were made into an anti-fouling coating composition in the same manner as in Example 1. The obtained coating composition had a viscosity of about 20 KU, namely became thickened, and was poor in storage stability.

### Comparative Example 2

In the same manner as in Example 1, a coating composition was prepared from 5 g of rubber chloride resin, 15 g of gum rosin, 4 g of tricresyl phosphate, 30 g of copper suboxide, 5 g of calcium carbonate, 3 g of barium oxide, 4 g of red iron oxide and 34 g of xylol.

### Comparative Example 3

A coating composition was prepared in the same manner as in Example 1 except that 62.5 g of the copolymer solution of Vinyl Polymer Preparation Example 3 was used in place of 50 g of the copolymer solution of Vinyl Polymer Preparation Example 1.

The coating compositions obtained in Examples 1 and 2 and Comparative Examples 1 to 3 were tested for anti-fouling property by the following method.

### Anti-fouling Property Test

Sandblasted steel panels measuring 100 x 300 x 2 mm and precoated with a zinc-epoxy shop primer (dry coating thickness 15 »m) and with an epoxy corrosion inhibiting coating composition (dry coating thickness 200 »m) were coated with each of the coating compositions obtained in Examples 1 and 2 and Comparative Examples 1 to 3 to a thickness of 100 »m when dried, and then dried for 7 days to prepare test panels.

The test panels were immersed in seawater at Toba Bay, Mie Prefecture, Japan for 24 months and tested for anti-fouling property. The results are shown in Table 1 (in which each value represents the area of deposition of organisms in percentage).

**Table 1**

| | Period of immersion | | |
|---|---|---|---|
| | 12 months | 18 months | 24 months |
| Example 1 | 0 | 0 | 0 |
| Example 2 | 0 | 0 | 0 |
| Comp. Ex. 1 | 0 | 0 | 5 |
| Comp. Ex. 2 | 0 | 15 | 50 |
| Comp. Ex. 3 | 0 | 10 | 20 |

## Claims

1. An anti-fouling coating composition which comprises (A) a resin, 3000-200,000 in number average molecular weight, having at least four acid anhydride groups in the molecule on the average, the acid anhydride groups being represented by the formula 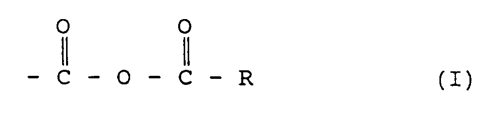 wherein R is a C₁₋₄₀ monovalent hydrocarbon group and (B) a rosin.

2. An anti-fouling coating composition as defined in claim 1 wherein the resin (A) is a vinyl resin.

3. An anti-fouling coating composition as defined in one or more of the claims 1 to 2 wherein the rosin (B) is gum rosin or wood rosin.

4. An anti-fouling coating composition as defined in one or more of the claims 1 to 3 wherein the resin (A) and the rosin (B) are used in amounts of 5 to 99% by weight of the resin (A) and 95 to 1% by weight of the rosin (B), based on the total amount thereof.

## Patentansprüche

1. Bewuchshemmende Beschichtungszusammensetzung, die umfaßt: (A) ein Harz mit einem Zahlendurchschnitt des Molekulargewichts von 3000 - 200.000, das durchschnittlich wenigstens 4 Säureanhydridgruppen im Molekül hat, wobei die Säureanhydridgruppen dargestellt werden durch die Formel 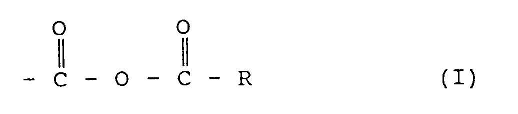 worin R eine einwertige C₁₋₄₀-Kohlenwasserstoffgruppe ist, und (B) ein Kolophonium.

2. Bewuchshemmende Beschichtungszusammensetzung nach Anspruch 1, worin das Harz (A) ein Vinylharz ist.

3. Bewuchshemmende Beschichtungszusammensetzung nach einem oder mehreren der Ansprüche 1 bis 2, worin das Kolophonium (B) Balsamharz oder Holzharz ist.

4. Bewuchshemmende Beschichtungszusammensetzung nach einem oder mehreren der Ansprüche 1 bis 3, worin das Harz (A) und das Kolophonium (B) in Mengen von 5 bis 99 Gew.-% des Harzes (A) und 95 bis 1 Gew.-% des Kolophoniums (B), bezogen auf deren Gesamtmenge, verwendet wird.

## Revendications

1. Composition de revêtement anti-salissure qui comprend (A) un résine, 3.000 à 200.000 en poids moléculaire moyen, comportant au moins quatre groupes anhydride d'acide en moyenne, dans la molécule, les groupes anhydride d'acide étant représentés par la formule 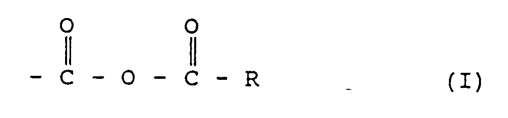 dans laquelle R est un groupe hydrocarboné monovalent C₁₋₄₀, et (B) une colophane.

2. Composition de revêtement anti-salissure selon la revendication 1, dans laquelle la résine (A) est une résine vinylique.

3. Composition de revêtement anti-salissure selon l'une des revendications 1 et 2, ou selon les deux, dans laquelle la colophane (B) est une colophane de gomme ou une colophane de bois.

4. Composition de revêtement anti-salissure selon l'une des revendications 1 et 2, ou selon les deux, dans laquelle la résine (A) et la colophane (B) sont utilisées en quantité comprise entre 5 et 99 % m/m de résine (A) et 95 à 1 % m/m de colophane (B), par rapport à la quantité totale de composition.
